Europäisches Patentamt

European Patent Office

Office européen des brevets

(19)

(11) Veröffentlichungsnummer: **0 047 871**
**B1**

(12) **EUROPÄISCHE PATENTSCHRIFT**

(45) Veröffentlichungstag der Patentschrift:
26.11.86

(21) Anmeldenummer: **81106398.1**

(22) Anmeldetag: **18.08.81**

(51) Int. Cl.⁴: **B 23 B 29/034**

(54) **Verstellantrieb für eine Werkzeugschneide.**

(30) Priorität: **11.09.80 DE 3034210**

(43) Veröffentlichungstag der Anmeldung:
**24.03.82 Patentblatt 82/12**

(45) Bekanntmachung des Hinweises auf die Patenterteilung:
**26.11.86 Patentblatt 86/48**

(84) Benannte Vertragsstaaten:
**FR GB IT SE**

(56) Entgegenhaltungen:
**DE-A-2 853 488**
**FR-A-1 543 490**
**FR-A-2 327 840**

(73) Patentinhaber: **Santrade Ltd., Alpenquai 12 P.O. Box 321, CH- 6002 Luzern (CH)**

(72) Erfinder: **Kaminsky, Theo, Südring 5, D-6102 Pfungstadt (DE)**

(74) Vertreter: **Katscher, Helmut, Dipl.- Ing., Bismarckstrasse 29, D-6100 Darmstadt (DE)**

LIBER, STOCKHOLM 1986

## Beschreibung

Die Erfindung betrifft einen Verstellantrieb für eine Werkzeugschneide, die in einem Werkzeugkörper mittels einer Schubstange radial verstellbar ist, die in einer drehangetriebenen Werkzeugspindel axial bewegbar ist, mit einem in einem Gehäuse des Verstellantriebs axial bewegbaren, undrehbaren Verstellkolben, der mit der Schubstange über ein Axiallager verbunden ist, und mit einem achsparallel zur Schubstange angeordneten Verstellmotor, dessen Ausgangswelle über eine Gewindespindel mit einer Spindelmutter verbunden ist, die in einem axial bewegbaren, undrehbaren Spindelkolben angeordnet ist, der mit dem Verstellkolben durch eine Brücke starr verbunden ist.

Die radiale Verstellung von Werkzeugschneiden dient zur Kompensation des an der Werkzeugschneide aufgetretenen Verschleißes und zum Abheben der Werkzeugschneide von der bearbeiteten Werkstückoberfläche am Ende eines Bearbeitungsvorganges, bevor das Werkzeug eine Rüzugsbewegung ausfürt.

Um eine Verstellbarkeit der Werkzeugschneide zu erreichen, kann das mit der Werkzeugschneide versehene Werkzeug beispielsweise ein Bohrmeißel, an einem schwenkbaren und/oder federnd verformbaren Teil des Werkzeugkörpers angebracht sein. Die Umsetzung der axialen Bewegung der Schubstange in eine radiale Bewegung der Werkzeugschneide erfolgt in den meisten Fällen über eine an der Schubstange vorgesehene Schrägfläche, an der sich der bewegliche Teil des Werkzeugkörpers abstützt (DE-A-24 05 694).

Wenn in einem Werkzeugkörper mehrere Werkzeugschneiden angeordnet sind, wird eine Verstellbarkeit aller oder zumindest mehrerer Werkzeugschneiden angestrebt, weil es nicht sinnvoll ist, nur die Standzeit einer einzigen Werkzeugschneide durch Kompensation des Schneidenverschleißes zu erhöhen, während die Gesamtstandzeit des Werkzeugs durch den nicht kompensierten Verschleiß einer anderen Werkzeugschneide bestimmt wird.

Die Verwendung mehrerer, koaxial angeordneter Schubstangen bereitet jedoch Schwierigkeiten, weil für jede dieser Schubstangen ein gesonderter Verstellantrieb vorgesehen werden muß. Es ist zwar bekannt (FR-A-23 27 840), bei einem Verstellantrieb der genannten Art die Gewindespindel hohl auszuführen, so daß eine oder mehrere Schubstangen koaxial hindurchgeführt und mit jeweils einem dahinter angeordneten, gesonderten Stellantrieb gleicher Bauweise verbunden werden könnten.

Wegen der verhältnismäßig großen Baulänge des bekannten Verstellantriebs würde die Gesamtbaulänge mehrerer hintereinander angeordneter Verstellantriebe aber sehr groß werden. Dies würde besonders für die innerste und deshalb dünnste und längste Schubstange besondere Schwierigkeiten bereiten.

Bei einem aus der DE-A-28 53 488 bekannten Verstellantrieb der eingangs genannten Gattung steht die Ausgangswelle des Verstellmotors über ein Stirnradgetriebe mit der Gewindespindel in Verbindung. Weder der auf der Gewindespindel befindliche Spindelkolben noch der mit der Schubstange verbundene Verstellkolben sind im Gehäuse selbst geführt. Die Führung des Spindelkolbens erfolgt nur auf der Gewindespindel; die Führung des mit der Schubstange verbundenen Verstellkolbens erfolgt nur durch die Spindelstange selbst.

Diese Art der Führung ist nicht präzise, weil mögliche Bewegungen und Verformungen die Verstellgenauigkeit beeinflussen. Hinzu kommt noch, daß die vom Verstellkolben auf die Spindelstange ausgeübten Seitenkräfte zu einer seitlichen Verformung der Spindel führen, wodurch die Genauigkeit des Werkzeugs beeinträchtigt wird.

Aufgabe der Erfindung ist es daher, einen Verstellantrieb der im Oberbegriff des Patentanspruchs 1 umrissenen Gattung zu schaffen, der bei möglichst geringem Raumbedarf eine sehr hohe Verstellgenauigkeit ermöglicht.

Diese Aufgabe wird erfindungsgemäß dadurch gelöst, daß die Ausgangswelle des Verstellmotors unmittelbar mit der Gewindespindel verbunden ist, daß der Verstellkolben und der Spindelkolben in achsparallelen Gehäusebohrungen geführt sind und daß die den Verstellkolben und den Spindelkolben verbindende Brücke durch einen die beiden Gehäusebohrungen verbindenden Längsschlitz ragt.

Im Gegensatz zu dem Verstellantrieb nach der genannten DE-A-28 53 488 erlaubt die Erfindung eine kleinstmögliche Bauweise bei größtmöglicher Genauigkeit und Steifigkeit der gesamten Verstelleinrichtung. Da die Ausgangswelle des Verstellmotors unmittelbar mit der Gewindespindel verbunden ist, ist eine spielfreie Übertragung der Antriebsbewegung zwischen dem Verstellmotor und der Gewindespindel gewährleistet. Im Gegensatz dazu ist ein Zahnradgetriebe ungenauer; seine Steifigkeit ist vor allem bei Drehrichtungsumkehr, d.h. bei einem Wechsel der Verstellrichtung, wesentlich geringer.

In besonderem Maße wird die Steifigkeit und Genauigkeit des erfindungsgemäßen Verstellantriebs gegenüber dem bekannten Stand der Technik durch eine exakte Führung des Spindelkolbens und des Verstellkolbens in der jeweiligen Gehäusebohrung erreicht, wobei die Lage beider Verstellkolben zueinander durch die verbindende Brücke gesichert ist. Die Führung des Spindelkolbens und des Verstellkolbens jeweils in einer Gehäusebohrung verhindert ein seitliches Ausweichen, d.h. alle auftretenden Seitenkräfte werden von der Gehäusebohrung aufgenommen und wirken sich nicht auf die Schubstange bzw. die Gewindespindel aus. Durch die Führung in den Gehäusebohrungen wird auch ein Verkanten des Spindelkolbens und/oder des Verstellkolbens verhindert. Dies ist besonders wichtig, weil die in Achsrichtung auszuübende verhältnismäßig hohe Verstellkraft sowohl am Spindelkolben als auch am Verstellkolben außermittig angreift.

Der erfindungsgemäße Verstellantrieb erlaubt in idealer Weise eine Kombination von zwei oder mehreren Verstellantrieben auf kleinstem Raum zur unabhängigen Ansteuerung von mehreren Schubstangen, die wiederum mehrere Schneiden in einem Werkzeug unabhängig voneinander verstellen können.

Da die Führung des Verstellkolbens in einer Gehäusebohrung und nicht durch die damit verbundene Schubstange erfolgt, wird erst die Hintereinanderschaltung mehrerer Verstellantriebe möglich, weil die Schubstangen hierfür verhältnismäßig lang und deshalb biegsam ausgeführt sein müssen. Außerdem ermöglicht erst diese Führung des Verstellkolbens in der Gehäusebohrung den Aufbau eines von der jeweiligen Maschine bzw. Maschinenspindel unabhängigen Verstellantriebs, weil die Maschinenspindel nicht zu Führungszwecken herangezogen wird.

Zweckmäßigerweise besteht die Brücke aus zwei mit dem Spindelkolben bzw. dem Verstellkolben verschraubten Flanschringen und einem die Flanschringe verbindenden Steg. Diese Ausführung der die Schubkraft übertragenden Brücke ist besonders platzsparend, insbesondere wenn der eine Flanschring der Brücke axial an der Spindelmutter und der andere Flanschring der Brücke axial am Axiallager des Verstellkolbens anliegt.

Die Erfindung wird nachfolgend an einem Ausführungsbeispiel näher erläutert, das in der Zeichnung dargestellt ist.

Es zeigt:

Fig. 1 einen Längsschnitt durch drei hintereinandergeschaltete Verstellantriebe und

Fig. 2 einen Schnitt längs der Linie II-II in Fig. 1.

Drei koaxial ineinander angeordnete Schubstangen 1, 1' und 1'' dienen zur radialen Verstellung von drei (nicht dargestellten) Werkzeugschneiden in einem (ebenfalls nicht dargestellten) Werkzeugkörper, beispielsweise einer Bohrstange. Zur radialen Verstellung der werkzeugschneiden müssen die Schubstangen 1, 1' und 1'', die sich mit der in einer Bohrspindel aufgenommenen Bohrstange drehen, Axialbewegungen ausführen. Diese Axialbewegungen werden durch drei hintereinandergeschachtelte Verstellantriebe 2, 2' und 2'' erzeugt. Da der grundsätzliche Aufbau jedes der drei Verstellantriebe 2, 2' und 2'' gleich ist, wird nachfolgend nur einer dieser Verstellantriebe näher beschrieben.

In einem Gehäuse 3 des Verstellantriebs ist in einer die Schubstange 1 umgebenden Gehäusebohrung 4 ein Verstellkolben 5 axial beweglich geführt. Über Axiallager 6 ist der Verstellkolben 5 mit der Schubstange 1 verbunden.

In einer Gehäusebohrung 7, die achsparallel neben der Gehäusebohrung 4 angeordnet und mit dieser durch einen Längsschlitz 8 verbunden ist, ist ein Spindelkolben 9 axial beweglich geführt. Der Verstellkolben 5 und der Spindelkolben 9 sind durch eine Brücke 10 miteinander verbunden. Die Brücke 10 besteht aus einem mit dem Verstellkolben 5 verschraubten und die Axiallager 6 haltenden Flanschring 11, einem mit dem Spindelkolben 9 verschraubten Flanschring 12 und einem die beiden Flanschringe 11, 12 verbindenen Steg 13. Die Brücke 10 stellt eine Drehsicherung für den Verstellkolben 5 und den Spindelkolben 9 dar, weil diese Kolben jeweils in parallelen Bohrungen 4, 7 geführt werden.

Im Spindelkolben 9 wird durch den Flanschring 12 eine Spindelmutter 14 gehalten, die mit einer Gewindespindel 15, beispielsweise einer Kugelumlaufspindel, in Eingriff steht. Die Gewindespindel 15 ist mittels Axiallagern 16 im Gehäuse 3 gelagert und ist unmittelbar mit einer Ausgangswelle 17 eines Verstellmotors 18 verbunden, der beispielsweise als Schrittmotor ausgeführt ist.

Bei einer Drehbewegung der Gewindespindel 15 werden der Spindelkolben 9 und der damit starr über die Brücke 10 verbundene Verstellkolben 5 axial bewegt. Diese Axialbewegung wird über die Axiallager 6 auf die sich drehende Schubstange 1 übertragen.

Die Schubstange 1 ist als Rohr ausgeführt und nimmt die ebenfalls als Rohr ausgeführte Schubstange 1' auf, in der die stangenförmige Schubstange 1'' angeordnet ist.

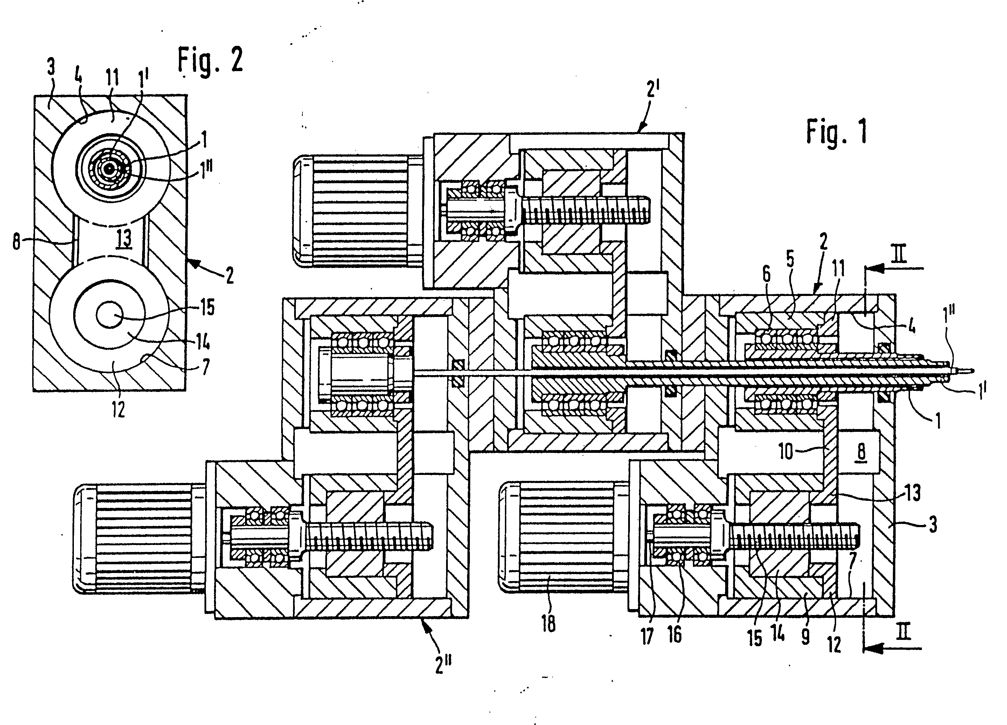

Aus der Darstellung in Fig. 1 erkennt man besonders deutlich die platzsparende Anordnung der Verstellantriebe 2, 2' und 2''. Der das Axiallager 16 für die Gewindespindel 15 aufnehmende Teil des Gehäuses 3 und der hieran angeflanschte Verstellmotor 18 liegen seitlich neben dem Gehäuse des nachfolgenden Verstellantriebs 2'. Die durch den Verstellmotor 18 und die Gewindespindel 15 bedingte Baulänge wirkt sich daher nicht auf die Gesamtbaulänge mehrerer hintereinandegeschachtelter Verstellantriebe aus.

**Patentansprüche**

1. Verstellantrieb für eine Werkzeugschneide, die in einem Werkzeugkörper mittels einer Schubstange (1, 1' bzw. 1'') radial verstellbar ist, die in einer drehangetriebenen Werkzeugspindel axial bewegbar ist, mit einem in einem Gehäuse (3) des Verstellantriebs axial bewegbaren, undrehbaren Verstellkolben (5), der mit der Schubstange (1, 1' bzw. 1'') über ein Axiallager (6) verbunden ist, und mit einem achsparallel zur Schubstange (1, 1' bzw. 1'') angeordneten Verstellmotor (18), dessen Ausgangswelle (17) über eine Gewindespindel (15) mit einer Spindelmutter (14) verbunden ist, die in einem axial bewegbaren, undrehbaren Spindelkolben (9) angeordnet ist, der mit dem Verstellkolben durch eine Brücke (10) starr verbunden ist, dadurch gekennzeichnet, daß die Ausgangswelle (17) des Verstellmotors (18) unmittelbar mit der Gewindespindel (15) verbunden ist, daß der Verstellkolben (5) und der Spindelkolben (9) in achsparallelen Gehäusebohrungen (4, 7) geführt sind und daß die den Verstellkolben (5) und den Spindelkolben (9) verbindende Brücke (10) durch einen die beiden Gehäusebohrungen (4, 7) verbindenden Längsschlitz (8) ragt.

2. Verstellantrieb nach Anspruch 1, dadurch gekennzeichnet, daß die Brücke (10) aus zwei mit dem Spindelkolben (9) bzw. dem Verstellkolben (5) verschraubten Flanschringen (12, 11) und einem die Flanschringe (12, 11) verbindenden Steg (13) besteht.

3. Verstellantrieb nach Anspruch 2, dadurch gekennzeichnet, daß der eine Flanschring (12) der Brücke (10) axial an der Spindelmutter (14) anliegt und daß der andere Flanschring (11) der Brücke (10) axial am Axiallager (6) des Verstellkolbens (5) anliegt.

## Claims

1. Adjustment drive for a tool cutter which is radially adjustable in a tool body by means of a connecting rod (1, 1' or 1'' respectively) which is axially movable in a rotating drive tool spindle with an axially movable, non-rotatable adjustment piston (5) in a housing (3) of the adjustment drive which is connected to the connecting rod (1, 1' or 1'' respectively) via an axial bearing (6), and with an adjusting motor (18) arranged with its axis parallel to the connecting rod (1, 1' or 1'' respectively), the output shaft (17) of which is connected via a threaded spindle (15) to a spindle nut (14) which is arranged in an axially movable, non-rotatable spindle piston (9) which is rigidly connected to the adjustment piston by a bridge (10), characterised by the fact that the output shaft (17) of the adjustment motor (18) is directly connected to the threaded spindle (15), that the adjustment piston (5) and the spindle piston (9) are guided in parallel-axis drilled holes in the housing (4, 7) and that the bridge connecting the adjustment piston (5) and the spindle piston (9) juts through a longitudinal slot (8) connecting the two drilled holes in the housing.

2. Adjustment drive according to Claim 1, characterised by the fact that the bridge (10) consists of two flanged rings (12, 11) screwed to the spindle piston (9) or the adjustment piston (5) respectively and a web (13) connecting the flanged rings (12, 11).

3. Adjustment drive according to Claim 2, characterised by the fact that the one flanged ring (12) of the bridge (10) is axially adjacent to the spindle nut (14) and that the other flanged ring (11) of the bridge (10) is axially adjacent to the axial bearing (6) of the adjustment piston (5).

## Revendications

1. Commande de déplacement d'un tranchant d'outil, déplaçable radialement dans un corps d'outil au moyen d'une barre de poussée (1, 1' ou 1'') qui est axialement mobile dans une broche d'outil actionnée en rotation, comprenant un piston de déplacement (5) non rotatif, déplaçable axialement dans un carter (3) de la commande de déplacement, piston qui est relié à la barre de poussée (1, 1' ou 1'') via un palier axial (6), et comprenant un servomoteur (18) dont l'axe est disposé parallèlement à la barre de poussée (1, 1' ou 1'') et dont l'arbre de sortie (17) est relié à un écrou d'axe (14) via un arbre fileté (15), ledit écrou étant disposé dans un piston d'arbre (9) non rotatif et déplaçable axialement qui est lui-même relié rigidement par une pièce de pont (10) au piston de déplacement, caractérisé en ce que l'arbre de sortie (17) du servomoteur (18) est relié directement à l'arbre fileté (15), en ce que le piston de déplacement (5) et le piston d'arbre (9) sont logés dans des cavités de carter (4, 7) parallèles à l'axe et en ce que la pièce de pont (10) qui relie le piston de déplacement (5) et le piston d'arbre (9) se dresse au travers d'une fente oblongue (8) qui relie les deux cavités de carter (4, 7).

2. Commande de déplacement suivant la revendication 1 caractérisée en ce que la pièce de pont (10) consiste en deux colliers (12, 11) boulonnés avec le piston d'arbre (9) ou le piston de déplacement (5) et en une entretoise (13) qui unit les colliers (12, 11).

3. Commande de déplacement suivant la revendication 2 caractérisée en ce que l'un des colliers (12) de la pièce de pont (10) est disposé axialement près de l'écrou d'axe (14) et en ce que l'autre collier (11) de la pièce de pont (10) est disposé axialement près du palier axial (6) du piston de déplacement (5).

Fig. 2

Fig. 1

0 047 871